# EUROPÄISCHE PATENTSCHRIFT

(11) **EP 1 704 003 B1**
(45) Veröffentlichungstag und Bekanntmachung des Hinweises auf die Patenterteilung: **22.08.2007**
(21) Anmeldenummer: 05700518.3
(22) Anmeldetag: 05.01.2005
(51) Int. Cl.: B21D 43/05

(54) **TRANSPORTVORRICHTUNG**
CONVEYING DEVICE
DISPOSITIF DE TRANSPORT

(30) Priorität: 15.01.2004 DE 102004002143
(43) Veröffentlichungstag der Anmeldung: 27.09.2006
(73) Patentinhaber: Müller Weingarten AG, 88250 Weingarten (DE)
(72) Erfinder: REICHENBACH, Rainer, 88281 Schlier (DE)
(74) Vertreter: Stern, Wolfgang
(86) Internationale Anmeldenummer: PCT/DE2005/000003
(87) Internationale Veröffentlichungsnummer: WO 2005/068103

(56) Entgegenhaltungen:
- EP-A- 1 040 881
- DE-A1- 19 636 822
- DE-A1- 19 801 731

## Beschreibung

Die Erfindung betrifft eine Transportvorrichtung zum Transportieren von Werkstücken durch eine Pressenstrasse, Transferpresse oder dergleichen nach dem Oberbegriff des Anspruches 1.

### Stand der Technik

Erfordert die Herstellung eines Werkstückes mehrere Stanz- und Umformvorgänge, so können zur wirtschaftlichen Fertigung die erforderlichen Einzeloperationen in einer Pressenstraße, Transferpresse oder Großteilstufenpresse durchgeführt werden.

Derartige Anlagen sind in der Regel mit Transportvorrichtungen zum automatischen Werkstücktransport versehen. Diese Transportvorrichtungen besitzen entweder eigene Antriebe oder werden vom Pressenantrieb bestätigt. Eine eigen angetriebene Transportvorrichtung ist in der DE 198 01 731 A1 offenbart. Zwei stationäre Antriebsmotoren treiben über eine Zugmittelanordnung eine teleskopierbare Auslegeranordnung an. Durch Regelung der Drehgeschwindigkeit und Drehrichtung der Antriebsmotoren führt die als Teleskopfeeder bekannte Transportvorrichtung Horizontal- und Vertikalbewegungen aus. Der geforderte Transportweg besteht in der Regel aus sich überlagernden horizontalen und vertikalen Bewegungen. Beliebige Bewegungsprofile sind mit diesem System fahrbar.

Ein Teleskopfeeder hat sich in der Praxis bewährt. Probleme entstehen jedoch insbesondere bei einem Einsatz der große Transportwege erfordert. So können bei der Fertigung von z. B. Seitenteilen für eine PKW-Karosserie die Abstände der Umformstufen 6 Meter und mehr betragen.

Für den Teleskopfeeder ist dann ein Führungssystem mit einer breiten Basis und großer Steifigkeit erforderlich. Da jedoch die Länge der Ausleger zur Vermeidung von Störkanten beim Transport bzw. Kollisionen bei dem Umformvorgang möglichst kurz sein soll, beeinflusst dieses auch die Führungsqualität.

### Aufgabe und Vorteil der Erfindung

Der Erfindung liegt die Aufgabe zugrunde, den Stand der Technik weiter zu entwickeln und eine Führung für den oder die Ausleger eines Teleskopfeeders vorzuschlagen, welche eine gute Führungsqualität gewährleistet.,

Diese Aufgabe wird ausgehend von einer Transportvorrichtung nach dem Oberbegriff des Anspruch 1, durch die kennzeichnenden Merkmale des Anspruch 1 gelöst.

In den Unteransprüchen sind vorteilhafte und zweckmäßige Weiterbildungen des Teleskopfeeders gemäß Anspruch 1 angegeben.

Der Erfindung liegt der Gedanke zugrunde, dass an einer feststehenden Traverse ein längsverschieblicher Ausleger so gelagert ist, dass beim horizontalen Verschieben dieses Auslegers die Führungswagen den halben Verschiebeweg durchfahren. Aufgrund dieses Bewegungsablaufes handelt es sich somit um eine Art mitfahrender Abstützung bzw. Führung. Um die Fahrbewegung der Führungswagen zu gewährleisten ist eine entsprechende Mitnahmevorrichtung vorgesehen.

Beispielhaft kann an der feststehenden Traverse und am beweglichen Ausleger jeweils eine Zahnstange befestigt werden die in Wirkverbindung mit einem am Führungswagen befestigten Zahnrad stehen. Eine Zwahgsmitnahme des Führungswagens bei der Horizontalverschiebung ist somit gegeben.

Durch die jeweilige Horizontalposition der Führungswagen wird die gewünschte breite Führungsbasis für den Teleskopfeeder erreicht.

Zur Erzielung geringer Transportzeiten sind hohe Beschleunigungen und Geschwindigkeiten erforderlich. Da sich das vorgeschlagene Führungssystem durch eine große Steifigkeit auszeichnet sind die dynamischen Bewegungen gut beherrschbar. Es treten somit beim Werkstücktransport auch nur geringe Schwingungen auf, wodurch eine definierte Ablage auf das Unterwerkzeug begünstigt wird und auch die Haltekräfte beim Transport gut beherrschbar werden.

Die Teleskopfeeder sind jeweils paarweise und spiegelbildlich zueinander im Bereich der Pressenständer angeordnet. An den beweglichen Auslegern befinden sich ebenfalls verfahrbare Schlitten mit angekuppeltem Querträger. Der Querträger ist mit Mittel zum Werkstücktransport bestückt. Die Horizontalbewegung des Auslegers und des Schlittens wird durch mindestens einen regelbaren Antrieb in Wirkverbindung mit zwei Zahnriementrieben betätigt.

In vorteilhafter Weise können auch zwei Antriebe verwendet werden, wodurch die Funktionssicherheit der Transportvorrichtung erhöht wird, d. h. bei dem Ausfall eines Antriebes würde der zweite Antrieb den Teleskopfeeder aus einem möglichen Kollisionsbereich fahren.

Als weitere Produktionsachse ist eine vertikale Bewegung vorgesehen. Zu diesem Zweck ist mit dem horizontal ortsfesten Aufnahmeträger ein Antriebssystem für den Vertikalhub verbunden.

Da bei der vorgeschlagenen Transportrichtung auf eine Zwischenablage bzw. Orientierstation verzichtet werden kann, ist die Konstruktion so modular aufgebaut, dass weitere zur Lageveränderung der Werkstücke erforderliche Freiheitsgrade integrierbar sind. Beispielhaft kann das Werkstück in und gegen die Transportrichtung geschwenkt werden. Zu diesem Zweck ist die Quertraverse am Schlitten drehbar und exzentrisch gelagert, wodurch das Werkstück in seinem Schwerpunkt schwenkbar ist.

Ohne Probleme ist auch eine Schrägstellung des Querträgers und damit des Werkstücks möglich, da die Vertikalachsen unabhängig voneinander verfahrbar sind. Ebenso ist ohne Einschränkung der Transport von Doppelteilen möglich.

Weitere Einzelheiten und Vorteile der Erfindung ergeben sich aus der nachfolgenden Erläuterung eines Ausführungsbeispiels das in den Figuren dargestellt ist.

Die Figuren zeigen:
Figur 1 Teilansicht von 2 Pressen mit einem Teleskopfeeder in Werkstück-Entnahmeposition.
Figur 2 wie Figur 1, jedoch Teleskopfeeder in Werkstück-Einlegeposition
Figur 3 Schnitt durch einen Führungswagen gemäß Schnittlinie A-A in Figur 1

### Beschreibung des Ausführungsbeispiels

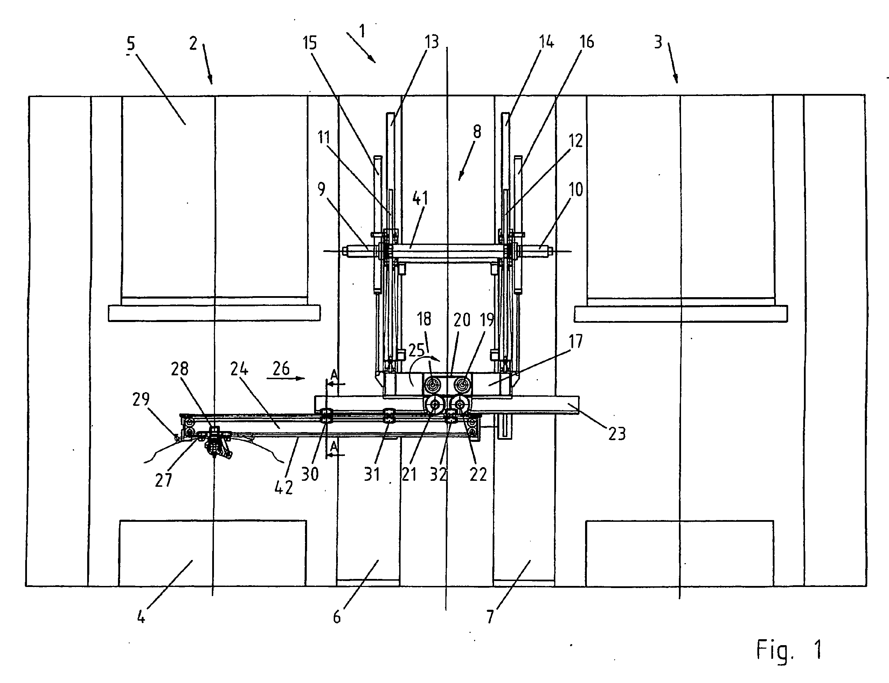

In Figur 1 sind von einer Pressenstraße 1 in vereinfachter Form Teilansichten der Umformbereiche der Pressen 2 und 3 dargestellt. Erkennbar sind der Schiebetisch 4 und der Stößel 5. Das Ober- und Unterwerkzeug ist nicht näher dargestellt. An den Pressenständern 6, 7 ist der Teleskopfeeder 8 befestigt. Der Antrieb für die Vertikalbewegung bewirken ortsfeste, regelbare Motoren 9, 10 die über Zahnritzel auf Zahnstangen 11, 12 einwirken. Linearführungen 13, 14 gewährleisten eine sichere Vertikalführung. Eine Zwangssynchronisation der Hubbewegung wird durch die Verbindungswelle 41 erreicht. Zur Entlastung der Antriebe 9, 10 kann eine Gewichtskompensation der zu bewegenden Massen durch Zylinder 15, 16 erfolgen.

Die Zahnstangen 11, 12 sind mit dem Querträger 17 verbunden an dem die Motoren 18, 19 angeordnet sind die einen Zahnriemen 20 antreiben. Aus Gründen der Funktionssicherheit werden zwei Motoren 18, 19 vorgeschlagen so dass bei dem Ausfall eines Motors der Teleskopfeeder mit Hilfe des zweiten Motors aus einem möglichen Kollisionsbereich gefahren werden kann.

Der Zahnriemen 20 wird über zwei Riemenscheiben 21, 22, die an der feststehenden Traverse 23 drehbar gelagert sind, umgelenkt und an einem beweglichen Ausleger 24 befestigt. Durch Betätigung der Antriebe 18, 19 in Drehrichtung 25 wird somit eine horizontale Bewegung des Auslegers 24 in Richtung des Pfeils 26 erzeugt. An dem Ausleger 24 befindet sich ein ebenfalls horizontal verfahrbarer Schlitten 27 mit angekuppeltem Querträger 28. Der Querträger 28 ist mit Werkstückhaltemitteln 29 bestückt. Der Schlitten 27 wird in bekannter Weise über Zahnriemen 42, der an der ortsfesten Traverse 23 durch eine Klemmverbindung gehalten wird, bewegt. Die Führung bzw. Abstützung des beweglichen Auslegers 24 an der Traverse 23 erfolgt durch Führungswagen 30, 31, 32.

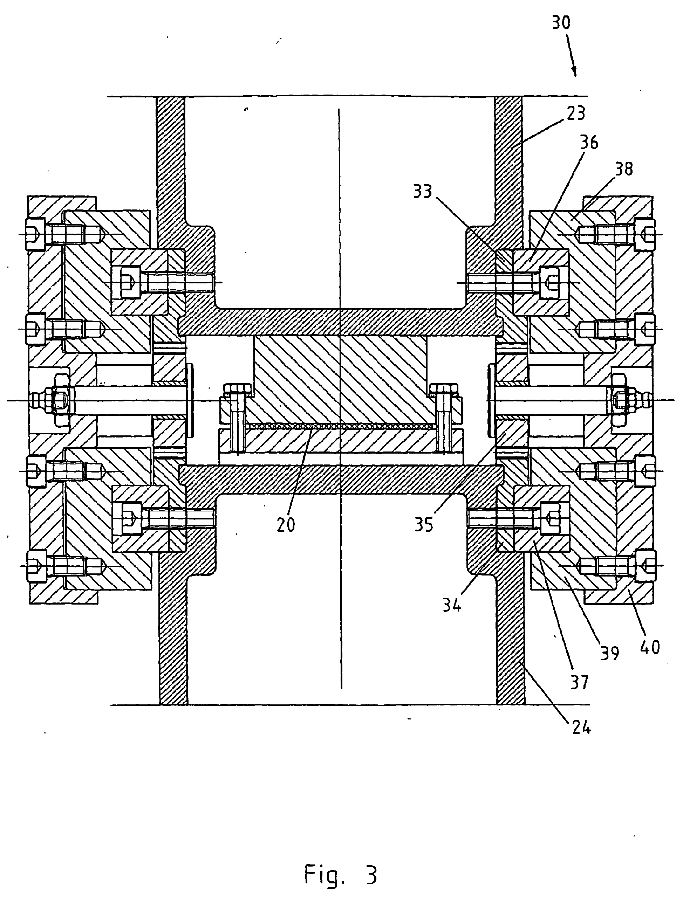

In Figur 3 ist der Führungswagen 30 im Schnitt dargestellt. Die Zahnstange 33 ist fest mit der Traverse 23 und die Zahnstange 34 mit dem Ausleger 24 verbunden. Ein Zahnrad 35 befindet sich zwischen den Zahnstangen 33 und 34 und ist mit beiden in ständigem Eingriff. An den Zahnstangen 33 und 34 sind Linearführungen 36 und 37 befestigt. Die Führungsschuhe 38 und 39 der Linearführung sind durch eine Halteplatte 40 miteinander verbunden.

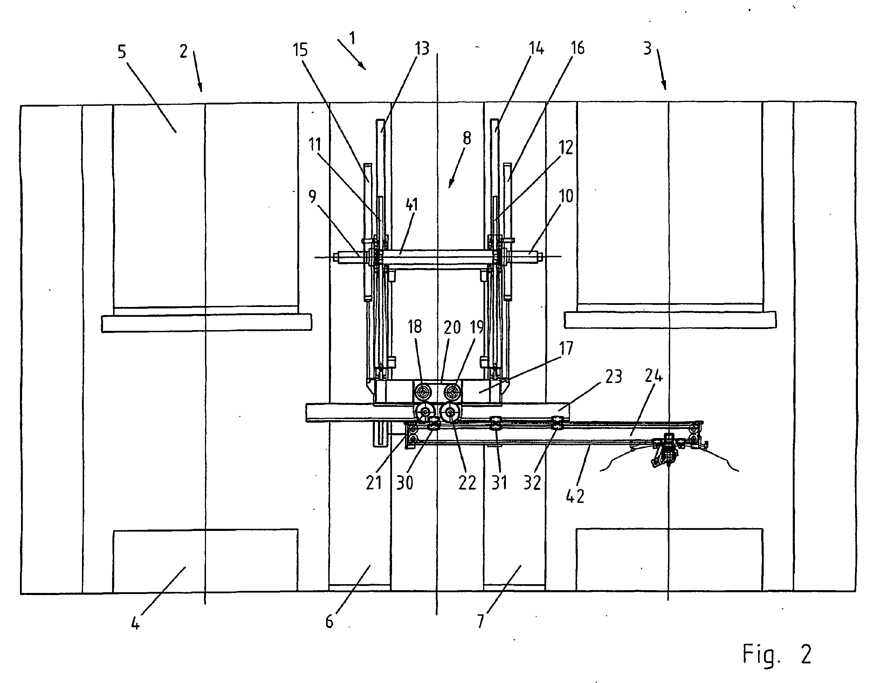

Die Linearführungen 36, 37 sind so gestaltet, dass die Führungsschuhe 38, 39 auch senkrecht zur Bewegungsrichtung gehalten werden. Wird der Zahnriemen 20 durch die Motoren 18, 11 angetrieben, so bewirkt dieses auch eine Bewegung des Auslegers 24 und der Zahnstange 34. Die Mitnahmeeinrichtung für den Führungswagen funktioniert derart, dass das Zahnrad 35 auf den Zahnstangen 33 und 34 abrollt, und der mit dem Zahnrad 35 verbundene Führungswagen 30 bewegt sich in die Richtung, in die sich der Ausleger 24 bewegt. Der gleiche Antrieb und Bewegungsablauf gilt auch für die Führungswagen 31 und 32. Wie aus Figur 1 und 2 ersichtlich verändert sich die Lage der Führungswagen 30 mit der Bewegung des Auslegers 24 und ist dieser gleichgerichtet, so dass eine sichere Abstützung des Auslegers 24 erreicht wird.

Die Erfindung ist nicht auf das beschriebene und dargestellte Ausführungsbeispiel beschränkt. Sie umfasst auch alle fachmännischen Ausgestaltungen im Rahmen des geltenden Anspruches 1, so kann beispielhaft die Mitnahmebewegung der Führungswagen durch Lineargetriebe wie Ketten oder Zahnriemen erfolgen. Ebenso kann die Linearführung in unterschiedlichen Geometrieformen wie beispielsweise Flach- oder Rundführung sowie als Gleit- oder Wälzführung ausgeführt werden. Ohne Einschränkung ist der erfinderische Gedanke auch bei Mehrfachteleskopen anwendbar. In vorteilhafter Weise werden dann bei jedem Teleskoppaar Führungswagen mit Mitnahmevorrichtungen angeordnet.

### Bezugszeichenliste

- 1: Pressenstrasse
- 2: Presse
- 3: Presse
- 4: Schiebetisch
- 5: Stößel
- 6: Pressenständer
- 7: Pressenständer
- 8: Teleskopfeeder
- 9: Motor
- 10: Motor
- 11: Zahnstange
- 12: Zahnstange
- 13: Linearführung
- 14: Linearführung
- 15: Zylinder
- 16: Zylinder
- 17: Querträger
- 18: Motor
- 19: Motor
- 20: Zahnriemen
- 21: Riemenscheibe
- 22: Riemenscheibe
- 23: Traverse
- 24: Ausleger
- 25: Pfeil für Drehbewegung
- 26: Pfeil für Längsbewegung
- 27: Schlitten
- 28: Querträger
- 29: Werkstückhaltemittel
- 30: Führungswagen
- 31: Führungswagen
- 32: Führungswagen
- 33: Zahnstange
- 34: Zahnstange
- 35: Zahnrad
- 36: Linearführung
- 37: Linearführung
- 38: Führungsschuh
- 39: Führungsschuh
- 40: Halteplatte
- 41: Verbindungswelle
- 42: Zahnriemen

## Patentansprüche

1. Transportvorrichtung zum Transportieren von Werkstücken, vorzugsweise durch eine Pressenstrasse oder Transferpresse, mit einer Hubvorrichtung, die mit einem Querträger (17) verbunden ist, der seinerseits eine in horizontaler Richtung ortsfeste Traverse (23) trägt, an der ein horizontal verfahrbarer Ausleger (24) mit verfahrbarem Schlitten (27) angeordnet ist, **dadurch gekennzeichnet, dass** mindestens ein Führungswagen (30) zur Führung des Auslegers (24) an der Traverse (23) vorgesehen ist, der durch eine Mitnahmeeinrichtung (33, 34, 35) in seiner Horizontalbewegung durch die Verfahrbewegung des Auslegers (24) antreibbar ist, und dass der mindestens eine Führungswagen (30) mit einer an Ausleger (24) und Traverse (23) befestigten Linearführung (36-39) wirkverbunden ist.

2. Transportvorrichtung nach Anspruch 1, **dadurch gekennzeichnet, dass** die Mitnahmeeinrichtung aus Zahnstangen (33, 34) und Zahnrad (35) besteht, wobei die antreibende Zahnstange (34) mit dem Ausleger (24) und die Zahnstange (33) mit der Traverse (23) fest verbunden sind.

3. Transportvorrichtung nach Anspruch 1, **dadurch gekennzeichnet, dass** die Linearführungen (36 - 39) Wälz- oder Gleitführungen sind, die als Flach- oder Rundführungen ausgebildet sind.

4. Transportvorrichtung nach Anspruch 1 bis 3, **dadurch gekennzeichnet, dass** die Führungsschuhe (38, 39) der Linearführung über Halteplatte (40) miteinander verbunden sind.

5. Transportvorrichtung nach einem oder mehreren der vorhergehenden Ansprüche, **dadurch gekennzeichnet, dass** der verfahrbare Ausleger (24) als teleskopierbarer Mehrfachausleger ausgebildet ist, wobei an jedem Teleskoppaar Führungswagen (30) mit Mitnahmevorrichtung (33, 34, 35) angeordnet sind.

6. Transportvorrichtung nach einem der Ansprüche 1 und 3 bis 5, **dadurch gekennzeichnet, dass** die Mitnahmevorrichtung aus einem Ketten- oder Zahnriementrieb gebildet ist.

## Claims

1. Transport device for transporting workpieces, preferably through a press line or transfer press, having a lifting device which is connected to a transverse member (17), which for its part carries a fixed crossbeam (23), on which there is arranged a horizontally travelling boom (24) capable of moving in a horizontal direction with a travelling carriage (27), **characterized in that** at least one guiding carriage (30) for guiding the boom (24) on the crossbeam (23) is provided, which is capable of being driven by a driver device (33, 34, 35) in its horizontal movement by the displacement of the boom (24), and **in that** the at least one guiding carriage (30) is in interactive engagement with a linear guide (36-39) attached to the boom (24) and the crossbeam (23).

2. Transport device according to Claim 1, **characterized in that** the driver device consists of toothed racks (33, 34) and a pinion (35), the driving toothed rack (34) being permanently connected to the boom (24) and the toothed rack (33) being connected to the crossbeam (23).

3. Transport device according to Claim 1, **characterized in that** the linear guides (36 - 39) are rolling guides or sliding guides, which are configured as flat guides or round guides.

4. Transport device according to Claims 1 to 3, **characterized in that** the guide shoes (38, 39) of the linear guide are connected to one another by means of a retaining plate (40).

5. Transport device according to one or more of the foregoing Claims, **characterized in that** the travelling boom (24) is configured as a telescoping multiple-segment boom, in conjunction with which guiding carriages (30) with a driver device (33, 34, 35) are arranged on each pair of telescopes.

6. Transport device according to one of Claims 1 and 3 to 5, **characterized in that** the driver device is in the form of a chain drive or a toothed belt drive.

## Revendications

1. Dispositif de transport pour le transport de pièces, de préférence à travers une ligne de presses ou une presse transfert, comportant un dispositif de levage qui est relié à une poutre transversale (17), qui porte à son tour une traverse fixe en direction horizontale (23) sur laquelle est disposée une flèche (24) déplaçable horizontalement avec un chariot mobile (27), **caractérisé en ce qu'**il est prévu, pour le guidage de la flèche (24) sur la traverse (23), au moins un chariot de guidage (30) qui peut être entraîné au moyen d'un dispositif d'entraînement (33, 34, 35) par le mouvement de déplacement de la flèche (24) dans son déplacement horizontal, et **en ce que** l'au moins un chariot de guidage (30) est en liaison active avec un guide linéaire (36-39) fixé à la flèche (24) et à la traverse (23).

2. Dispositif de transport selon la revendication 1, **caractérisé en ce que** le dispositif d'entraînement se compose de crémaillères (33, 34) et d'une roue dentée (35), dans lequel la crémaillère menante (34) est solidaire de la flèche (24) et la crémaillère (33) est solidaire de la traverse (23).

3. Dispositif de transport selon la revendication 1, **caractérisé en ce que** les guides linéaires (36-39) sont des guides à roulement ou à glissement, qui sont des guides plats ou ronds.

4. Dispositif de transport selon l'une quelconque des revendications 1 à 3, **caractérisé en ce que** les sabots de guidage (38, 39) du guide linéaire sont reliés l'un à l'autre par une plaque de support (40).

5. Dispositif de transport selon une ou plusieurs des revendications précédentes, **caractérisé en ce que** la flèche déplaçable (24) est une flèche multiple télescopique, dans lequel des chariots de guidage (30) avec un dispositif d'entraînement (33, 34, 35) sont disposés sur chaque paire d'éléments télescopiques.

6. Dispositif de transport selon l'une quelconque des revendications 1 et 3 à 5, **caractérisé en ce que** le dispositif d'entraînement est formé par un entraînement à chaîne ou à courroie dentée.
